(19) Europäisches Patentamt
European Patent Office
Office européen des brevets

(11) **EP 2 332 721 A1**

(12) **EUROPÄISCHE PATENTANMELDUNG**

(43) Veröffentlichungstag:
**15.06.2011 Patentblatt 2011/24**

(51) Int Cl.:
*B32B 15/01* (2006.01)    *B23K 20/22* (2006.01)
*B32B 3/12* (2006.01)    *B32B 5/14* (2006.01)
*B32B 7/02* (2006.01)    *B32B 7/04* (2006.01)
*B32B 7/14* (2006.01)    *B32B 15/18* (2006.01)
*B32B 15/20* (2006.01)    *F41H 5/04* (2006.01)

(21) Anmeldenummer: 09178757.2

(22) Anmeldetag: **10.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(71) Anmelder: **ETH Zurich**
**8092 Zurich (CH)**

(72) Erfinder: **Hora, Pavel**
**5507 Melligen (CH)**

(74) Vertreter: **Kley, Hansjörg**
**Siemens AG**
**Postfach 22 16 34**
**80506 München (DE)**

(54) **Verbundmaterial**

(57)    Es wird ein flächiger Verbundwerkstoff (10) vorgeschlagen, der aus wenigstens zwei flächigen miteinander verbundenen (3) Komponenten (1, 2) gebildet wird. Die erste Komponente besteht aus einem hochfestem Werkstoff (1) und die zweite Komponente (2) aus einem Leichtbaumaterial(2). Die erste Komponente (1) ist vorzugsweise aus einem Drahtgitter gebildet. Durch eine entsprechende Dimensionierung von erster und zweiter Komponente (1, 2) ist ein Verbundwerkstoff (10) geschaffen, der sich hinsichtlich des spezifischen Gewichtes und der mechanischen Eigenschaften sehr weitgehend skalieren lässt.

FIG 1

EP 2 332 721 A1

**Beschreibung**

Die vorliegende Erfindung bezieht sich auf ein Schicht-Verbundwerkstoff gemäss dem Oberbegriff des Patentanspruchs 1.

Metallische Strukturen, welche sowohl hohe Festigkeits- wie auch hohe Crashresistenz aufweisen müssen werden z.B. im Fahrzeug- und Flugzeugbaueingesetzt. Für diesen Einsatz ist es wichtig, ein Material zu verwenden, welches ein geringes spezifisches Gewicht aufweist. Der Grund hierfür ist ein daraus resultierendes geringeres Gewicht der Gesamtkonstruktion und damit ein geringerer Energie- und/oder Kraftstoffverbrauch.

Ausser den Anforderungen des Leichtbaus gibt es aber sowohl fertigungsspezifische als auch sicherheitsrelevante und konstruktionsbedingte Anforderungen an das Baumaterial, welche ausser des geringen spezifischen Gewichtes andere Werkstoffeigenschaften wie z.B. einen hohen E-Modul oder eine gute Umformbarkeit voraussetzen.

Die Anforderung, diese Strukturteile mit Hilfe der fertigungstechnisch effizienten Umformverfahren herstellen zu können, setzt eine hohe Duktilität des Werkstoffes voraus , wodurch die bekannten nicht-metallischen Verbundmaterial, ausgeschlossen werden.

Zudem sollte sowohl die Streckgrenze als auch der E-Modul des neuen Werkstoffes möglichst hohe Werte aufweisen, damit eine hohe Steifigkeit der Struktur bei kleinen Wandstärken erzielt werden kann. Die Kombination der Materialeigenschaften «hohe Festigkeit» und «hohe Duktilität» ist anzustreben, um eine möglichst hohe Energieabsorbtion im Falle eines Crashs zu erzielen; Anwendung: Knautschzone bei einem Automobil. Bei Leichtmetallen wie Aluminium oder bei Aluminiumlegierungen ist dies in der Regel nicht der Fall, da solche Metalle ein geringes Elastizitätsmodul (E-Modul) aufweisen.

Verbundmaterialien, welche die Materialeigenschaften von zwei oder mehreren reinen Materialien bzw. Elementen verbinden, sind in der Technik bekannt. Allerdings wurden im Karosseriebau bisher keine rein metallischen Schicht-Verbundwerkstoffe eingesetzt. Es wurden verschiedentlich mit Matallblech-Kunststoffkern-Schichtverbundwerkstoffe experimentiert, z.B. Toyota, dies insbesondere, um optimale akustische Dämmung zu erzielen. Die bisherigen Material-Kombinationen bei rein metallischen Werkstoffen beschränken sich auf sogenannte tailored-blanks (geschweisste Platinen). Diese Lösungen sind somit keine Schichtverbundwerkstoffe.

Bekanntester Vertreter dieser Klasse an Materialien ist ein Verbund aus einer Duromer Matrix mit Kohlefasern, auch kohlenstofffaserverstärkter Kunststoff CFK genannt.

In GB 1235973 [1] ein Verbundmaterial offenbart, bei dem eine Aluminiummatrix durch Stahldrähte verstärkt wird. CFKs und auch das Verbundmaterial gemäss GB 1235973 [1] zeichnen sich dadurch aus, dass die verstärkenden Fasern gerichtet sind, wodurch das Material eine anisotrope Elastizität und/oder Zugfestigkeit aufweist. Im Fahrzeugbau ist diese Anisotropie jedoch nicht immer gewünscht. In GB 1235973 [1] , Seite 1, Zeilen 32ff wird sogar erwähnt, dass es nicht vorteilhaft ist, Fasern in verschiedene Richtungen auszurichten um die Anisotropie zu überwinden, da hierdurch die Anzahl Fasern für eine gegebene Versteifungsrichtung verringert wird und in der Folge nicht die maximale Versteifung in einer Richtung erreicht wird.

Aus der Schrift DE 10 2006 025 280 A1 [1] ist ein Verfahren zur Herstellung eines faserverstärkten Bauteils offenbart, das erlaubt, hochfeste faserverstärkte Bauteile in einem Schritt kostengünstig herzustellen. Dies wird dadurch erreicht, als ein faserverstärktes Bauteil als Bündel einer Endlosfaser imprägniert wird und als Faser/Matrix-Strang mit einem Handhabungsgerät über eine Düse konturnah in eine temperierte Vorrichtung gelegt und dadurch anschliessend konsolidiert wird. Diese Strukturen weisen in der Regel hohe Wandstärken auf und sind auch nicht kostengünstig herstellbar.

Ferner ist aus der GB1 235 973 [1] ein Verbundwerkstoff aus Aluminium und Stahl bekannt, bei dem in einer Matrix zu den Fasern aus Aluminium oder einer Aluminiumlegierung in zu den Fasern parallelen Stahlbänder gelegt sind. Die Stahlbänder haben ein Seitenverhältnis von 1:15 bis 1:300. Dabei sind die Stahlbänder in den verschiedenen Lagen je quer zu einander angeordnet. Das Volumenverhältnis zwischen den Stahlbändern und der Matrix beträgt 10% bis 70%.

Der vorliegenden Erfindung liegt daher die Aufgabe zugrunde, einen Schicht-Verbundwerkstoff anzugeben, der gegenüber dem in [1] offenbarten Stoff verbessert ist und folgende Eigenschaften aufweisen soll:

- skalierbar hinsichtlich der Festigkeitseigenschaften $R_{p0,2}$ und $R_m$;
- skalierbar hinsichtlich des spezifischen Gewichtes;
- skalierbar betreffend des E-Moduls und somit der Steifigkeit der Struktur.
- skalierbar betreffend der Duktilität; Umformbarkeit, Bruchdehnung $A_{80}$;
- leicht rezyklierbar.

Ferner soll ein einfaches und kostengünstiges Verfahren zur Herstellung eines solchen Schicht-Verbundwerkstoffes angegeben werden.

Diese Aufgabe wird durch die in den unabhängigen Patentansprüchen angegebenen Massnahmen gelöst.

Vorteilhafte Ausgestaltungen der Erfindung sind in weiteren Ansprüchen angegeben.

Die wesentliche Idee der vorliegenden Erfindung besteht darin, einen Leichtbauwerkstoff (z.B. Aluminium-Blechwerkstoff oder Magnesium ) mit einem weiteren flächigen, ggf. auch strukturierten hochfestem Werkstoff zu verbinden. Hochfeste Werkstoffe sind solche z.B. auf der Basis von TRIP oder TWIP-Werkstoffe. Diese werden nachfolgend als «Stützschicht» bezeichnet. Der Leichtbauwerkstoff hat dabei auch eine Funktion hinsichtlich des Korrosionsschutzes (Rost). Die bezüglich Schmelztemperaturen deutlich verschiedenen Materialien haben gegenüber den bekannten Kohle-Faserverbundwerkstoffen CFK den grossen Vorteil der einfachen Recyclierbarkeit: Durch Einschmelzen lassen sich die Komponenten einfach trennen.

Ein wichtiger Bestandteil der Innovation besteht darin, dass die Stützschicht aus dem genannten hochfesten sehr gut umformbaren Material sowohl aus vollem Blechmaterial wie auch aus industriell vorfabrizierten Metall-Netzwerkstoffen mit unterschiedlichen - anwendungsspezifisch optimierten Webstrukturen (Maschenweite, Drahtlage) - bestehen kann. Dieses hochfeste Material vorzugsweise aus Stahl oder einer Fe-, Cr- und/oder Ni-Legierung kann charakterisiert werden durch

$$R_m \; > \; 500 \; N/mm^2 \; .$$

Dem gegenüber werden im Kontext dieses Verbundwerkstoffes für die Komponente Leichtbauwerkstoffe solche verstanden, die ein spezifisches Gewicht

$$\rho \; < \; 3 \; g/cm^3$$

aufweisen, wie z.B. Al oder Mg.

Da insbesondere die Stahl-Drahtwerkstoffe höchste Festigkeiten bei hoher Duktilität aufweisen, werden die weniger festen Leichtbauwerkstoffe versteift und gleichzeitig zu verbesserten Duktilitätseigenschaftwerten $A_{80}$ verschoben.

So können sich bei Verwendung einer Drahtfasermatte als hochfester Werkstoff die folgenden Vorteile zusätzlich ergeben:

i) Dadurch werden bei der Umformung des Schicht-Verbundwerkstoffes durch Tiefziehen, Streckziehen, Biegen oder auch Hydroformieren Einschnürungen im Leichtbau-Blechwerkstoff unterdrückt, so dass das Riss-Versagen gegenüber dem homogenen Leichtbau-Blechwerkstoff erst verspätet auftritt.

ii) Der E-Modul erhöht sich entsprechend zur Mischregel.

iii) Wie schon vorstehend erwähnt, hat der Leichtbau-Blechwerkstoff im Falle eines Aluminiums auch eine Schutzfunktion.

iv) Da es sich bei den vorgeschlagenen Werkstoffen um reine metallische Schichtverbundwerkstoffe handelt, ist auch die spätere Montierbarkeit der Teile, z.B. durch Schweissen, Löten oder Clinchen gewährleistet.

v) Ein weiterer Vorteil ist die Möglichkeit zur Fertigung von strukturierten Design-Oberflächen. Bei Kombination dünner Deckbleche mit Drahtfasermatten entsteht nach dem Walzen (in der Regel dem Warmwalzen) eine strukturierte Oberfläche, die optisch durch Fingerabdrücke nicht beeinträchtigt wird und somit auch bei intensiver manueller Berührung stets einen sauberen Eindruck hinterlässt; also z.B. keine «Fingerprints».

vi) Summarisch lassen sich die verbesserten Eigenschaften wie folgt wiedergeben:

- Erhöhter E-Modul, Zielwerte 80 - 110 MPa;
- hohe Crashresistenz;
- Hohe Festigkeit bei gleichzeitig sehr guter Umformbarkeit.

Die Erfindung wird nachfolgend anhand der Zeichnung beispielsweise näher erläutert. Dabei zeigen:

Figur 1 Schnittdarstellung eines flächigen Verbundwerkstoffes;

Figur 2 Verlauf des spezifischen Gewichtes in Abhängigkeit des Anteils des Eisenwerkstoffes

Figur 3 Verlauf des E-Moduls in Abhängigkeit des Anteils des Eisenwerkstoffes.

Figur 4 Beispiel eines Drahtfasermatte als orthogonales Drahtgitter

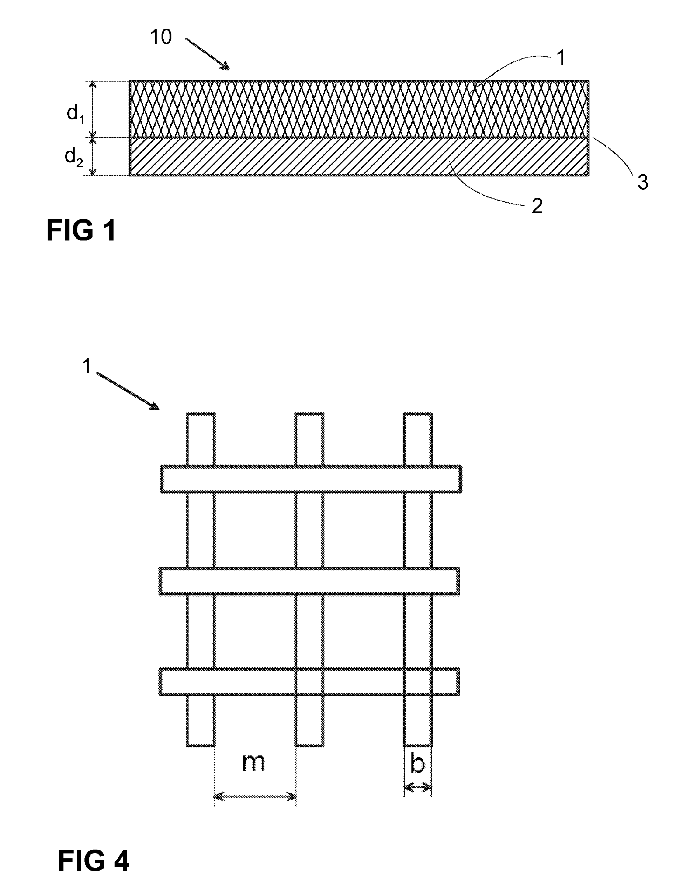

Figur 1 zeigt den Verbundwerkstoff 10 mit zwei flächigen Komponenten:

Erste Komponente 1 aus einem Eisenwerkstoff;
zweite Komponente 2 aus einem Aluminiumblechmaterial.

Die beiden Komponenten sind - wie weiter unten detaillierter erläutert - verbunden, vgl. Bezugzeichen 3. Die Dicken der beiden flächigen Komponenten sind je mit $d_1$ bzw. $d_2$ bezeichnet. Die Zeichnung zeigt einfach ein Beispiel, es sind auch Ausführungsformen möglich, bei den entgegen der Darstellung in der Figur 1 gilt: $d_1 < d_2$.

Besonders vorteilhaft ist die Verwendung einer Drahtfasermatte als aus hochfestem und hochduktilem, flächigem Werkstoff. Unter Drahtfasermatten figurieren Drahtgitter jedwelcher Ausprägung. Nachstehend werden Beispiele zu orthogonalen quadratischen Drahtgittern gegeben. Die Erfindung ist keineswegs auf solche orthogonale Drahtgitter beschränkt, es sind beliebige Strukturen bezüglich der Drahtfassermatten denkbar, bei denen die Drähte in Gruppen parallel und zu einer anderen Gruppe gedreht angeordnet sind. Beispiele:

- Rechteckstruktur;
- Wabenstruktur;
- Polygone,
- usw.

Im Sinne dieser Schrift werden die Begriffe «Drahtfasermatte» 2 und «Drahtgitter» 2 synonym verwendet.

Die Figur 4 zeigt ein quadratisches Drahtgitter. Folgende Dimensionen gemäss der Tabelle 1 haben sich aufgrund der Versuche als vorteilhaft erwiesen:

Tabelle 1 : Dimensionen für Drahtgitter

| Maschenweite m [ mm ] | Drahtdicke b [ $\mu$m ] | Dicke $d_1$ [ mm ] |
|---|---|---|
| 0,36 | 240 | 0,1 |
| 0,45 | 200 | 0,1 |

Für die in Tabelle 1 gezeigten Werte kann folgender Stahl verwendet werden: Stelle AISI 304 (1.4306).

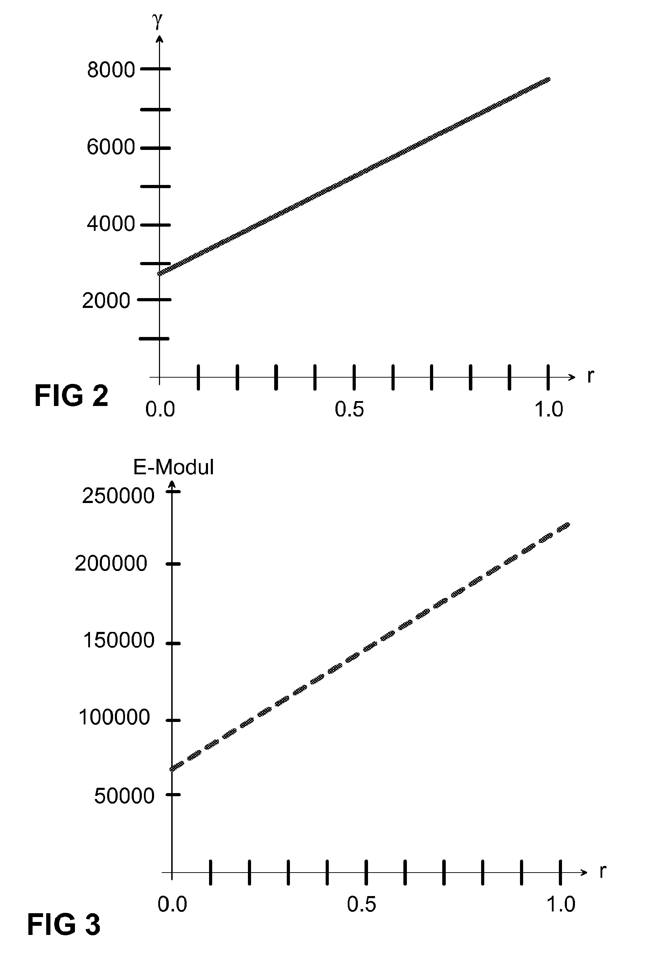

Figur 2 zeigt exemplarisch den Verlauf des spezifischen Gewichtes $\rho$ über das Mischverhältnis r = (1-$V_{Al}/V_{tot}$) der Zusammensetzung Aluminium/Stahl 1.4306.

In Figur 3 ist der zu erwartende Verlauf des Elastizitätsmoduls E-Modul ebenfalls in Abhängigkeit des Mischverhältnisses r dargestellt. Die Einheit ist in [N/mm$^2$]. Aus den beiden Diagrammen wie auch aus hier nicht gezeigten Diagrammen bezüglich Fliesspannung $k_f$ (eps0.45) und Streckgrenze ist unschwer zu erkennen, dass durch eine geeignete Kombination des Leichtbauwerkstoffes Al mit einem hochfestem Stützwerkstoff auf der Fe-Basis ein gewünschter metallischer Schicht-Verbundwerkstoff beliebig skalierbar wird.

Die Herstellung dieses Verbundwerkstoffes kann wie folgt erfolgen:

i) Die beiden flächigen Komponenten der Leichtbauwerkstoff 2 (z.B. Al) und der Stützwerkstoff 1 (z.B. TRIP) werden durch Warmwalzen miteinander verbunden. Dabei entsteht an den Materialübergängen eine sogenannte Interdiffusionsschicht 3, diese Schicht ist in Figur 1 nur schematisch dargestellt. Als Richtwert ist hier eine Walzstichabnahmen von 5 bis 50% der initialen Schichtverbunddicke vorgesehen. Der Begriff «Walzstichabnahme» ist auch unter dem Begriff «Abwalzgrad» bekannt. Der Abwalzgrad beschreibt die Änderung der Blechdicke beim Walzen und wird in Prozent angegeben. Zweckmässigerweise wird eine Temperatur im Bereich von 350° bis 500°C gewählt.

Bei der Kombination von Werkstoffen wie z.B. Aluminium und rostfreie Werkstoffe aus 1.4306 muss die Bildung einer brüchigen intermetallischen Phase zwischen den beiden Materialien durch zusätzlichen Einsatz von Puffermaterialien und durch eine optimale Wahl der Walzbedingungen verhindert werden.

ii) Die beiden flächigen Komponenten Leichtbauwerkstoff 2 und Fe-Stützwerkstoff 1 werden durch ein Lötmaterial 3 miteinander verbunden.

iii) Die beiden flächigen Komponenten Leichtbauwerkstoff 2 und Fe-Stützwerkstoff 1 werden durch einen Klebstoff 3 miteinander verbunden. In diesem Fall besteht die Fe-Stützfolie aus einem (vollen) Blechwerkstoff.

iv) Die beiden flächigen Komponenten Leichtbauwerkstoff 2 und Fe-Stützwerkstoff 1 werden durch eine Kombination von wenigstens zwei der vorstehend aufgeführten drei Verfahren i) bis iii) verbunden.

Ausser dem hier gezeigten Schichtaufbau «Leichtbauwerkstoff-Stützwerkstoff-Leichtbauwerkstoff», z.B. Al-Fe-A1, nachfolgend als "Typ A" bezeichnet, sind alle anderen Kombinationen ebenfalls einsetzbar. Dies trifft insbesondere auch für die Variante «Stützwerkstoff-Leichtbauwerkstoff-Stützwerkstoff», z.B. Fe-Al-Fe, nachfolgend als "Typ B" bezeichnet, zu. Die 3-Schicht-Grundkombinationen sind auf beliebig viele Schichten erweiterbar: Superposition des Grundaufbaus n-mal Typ A sowie n-mal Typ-B, und auch kombinierbar, z.B. Al-Fe-Al-Fe.

**Liste der Bezugszeichen, Glossar**

1    Erste flächige Komponente; Komponente aus hochfestem Material, Fe-Material; hochfeste Stähle TRIP oder TWIP; Drahtgitter, Drahtfasermatte

2    Zweite flächige Komponente; Leichtbauwerkstoff, z.B. Al oder Mg

3    flächige Verbindung zwischen erster und zweiter flächiger Komponente; Lötmaterial, Klebstoff, Inter-diffusionsschicht

10    Flächiger Verbundwerkstoff

AISI    American Iron and Steel Institute

$A_{80}$    Bruchdehnung

b    Drahtdurchmesser

$d_1$    Dicke der ersten flächigen Komponente

$d_2$    Dicke der zweiten flächigen Komponente Spezifisches Gewicht

m    Maschenweite

r    Relativer Anteil Eisenwerkstoff 0.0 .. 1.0

$R_m$    Zugfestigkeit

$R_{p0,2}$    Dehngrenze

TRIP    Transformation Induced Plasticity

TWIP    Twinning Induced Palsticity

**Liste der zitierten Dokumente**

[1] GB 2 335 973
«Aluminium-Steel composite materials» veröffentlicht 16. Juni 1971

**Patentansprüche**

**1.** Flächiger Verbundwerkstoff (10) gebildet aus wenigstens zwei flächigen miteinander verbundenen (3) Komponenten (1, 2);
**dadurch gekennzeichnet, dass**
die eine Komponente (1) aus einem hochfestem Werkstoff (1) und die andere Komponente (2) aus einem Leichtbauwerkstoff (2) besteht.

**2.** Flächiger Verbundwerkstoff (10) nach Anspruch 1;
**dadurch gekennzeichnet, dass**
als hochfester Werkstoff ein Metall oder eine Metall-Legierung mit einer Zugfestigkeit

$$R_m \; > \; 500 \; N/mm^2$$

und als Leichtbauwerkstoff mit einem spezifischen Gewicht

$$\rho \quad > \quad 3 \ \mathrm{g/cm}^3$$

vorgesehen ist.

**3.** Flächiger Verbundwerkstoff (10) nach Anspruch 1 oder 2;
**dadurch gekennzeichnet, dass**
die aus hochfestem Werkstoff bestehende Komponente (1) als Drahtgitter (1) ausgebildet ist.

**4.** Flächiger Verbundwerkstoff (10) nach einem der Ansprüche 1 bis 3;
**dadurch gekennzeichnet, dass**
die beiden flächigen Komponenten (1, 2) durch einen Klebstoff (3) miteinander verbunden sind.

**5.** Flächiger Verbundwerkstoff (10) nach einem der Ansprüche 1 bis 3;
**dadurch gekennzeichnet, dass**
die beiden flächigen Komponenten (1, 2) durch einen Lötmaterial (3) miteinander verbunden sind.

**6.** Flächiger Verbundwerkstoff (10) nach einem der Ansprüche 1 bis 3;
**dadurch gekennzeichnet, dass**
die beiden flächigen Komponenten (1, 2) durch eine durch Warmwalzen der beiden flächigen Komponenten (1, 2) entstehende Interdiffusionsschicht (3) miteinander verbunden sind.

**7.** Flächiger Verbundwerkstoff (10) nach Anspruch 5;
**dadurch gekennzeichnet, dass**
die beiden flächigen Komponenten (1, 2) durch einen Lötmaterial (3) miteinander verbunden sind, wobei das Lötmaterial (3) zwischen die Drähte des Drahtgitters (1) eingefügt ist und dadurch die beiden flächigen Komponenten (1, 2) zusammenhält.

**8.** Flächiger Verbundwerkstoff (10) nach Anspruch 5;
**dadurch gekennzeichnet, dass**
alternierend drei flächige Komponenten miteinander verbunden sind, wobei der Verbundwerkstoff entweder

   A die Reihenfolge Leichtbauwerkstoff - hochfester Werkstoff - Leichtbauwerkstoff oder
   B die Reihenfolge hochfester Werkstoff-Leichtbauwerkstoff - hochfester Werkstoff

aufweist.

**9.** Verfahren zur Herstellung eines flächigen Verbundwerkstoffes (10);
**gekennzeichnet durch** die Verfahrensschritte:

   A Aneinanderlegen einer flächigen Komponente (1) aus einem hochfestem Werkstoff und einer flächigen Komponente (2) aus Leichtbauwerkstoff;
   B Verbinden der beiden flächigen Komponenten mit einem weiteren Material (3).

**10.** Verfahren nach Anspruch 9,
wonach im Verfahrensschritt B die Verbindung durch Warmwalzen erfolgt, wobei das Material (3) durch eine durch das Warmwalzen entstehende Interdiffusionsschicht (3) gebildet wird.

**11.** Verfahren nach Anspruch 10,
wonach das Warmwalzen im Temperaturbereich von 350°C bis 500°C und mit einem Abwalzgrad von 5 bis 50% erfolgt.

**12.** Verfahren nach Anspruch 9,
wonach im Verfahrensschritt B die Verbindung durch Aufbringen eines Klebstoffes (3) vorgenommen wird.

**13.** Verfahren nach Anspruch 9,
wonach im Verfahrensschritt B die Verbindung mit einem Lötmaterial (3) durch Löten erfolgt.

**14.** Verfahren nach einem der Ansprüche 9 bis 13;
wonach die aus hochfestem Werkstoff bestehende Komponente (1) als Drahtgitter (1) ausgebildet ist.

**15.** Verfahren nach Anspruch 13;
wonach im Verfahrensschritt A die flächigen Komponente (1) aus dem hochfestem Werkstoff als Drahtgitter ausgebildet ist und im Verfahrensschritt B die Verbindung mit einem Lötmaterial (3) durch Löten erfolgt, wobei das Lötmaterial (3) zwischen die Drähte des Drahtgitters eindringt.

**FIG 1**

**FIG 4**

FIG 2

FIG 3

# EP 2 332 721 A1

**Europäisches Patentamt**
**European Patent Office**
**Office européen des brevets**

## EUROPÄISCHER RECHERCHENBERICHT

**Nummer der Anmeldung**

EP 09 17 8757

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 44 12 865 A1 (MECKENSTOCK H W KG [DE]; DIEDRICHS HELMUT W [DE] WILHELM MECKENSTOCK G) 19. Oktober 1995 (1995-10-19) * Ansprüche 1-17 * * Spalte 2, Zeile 18 - Spalte 6, Zeile 24 * * Abbildungen 1-11b * ----- | 1-15 | INV. B32B15/01 B23K20/22 B32B3/12 B32B5/14 B32B7/02 B32B7/04 B32B7/14 B32B15/18 B32B15/20 F41H5/04 |
| X | US 3 406 446 A (MULDOVAN STEPHEN A) 22. Oktober 1968 (1968-10-22) * Ansprüche 1-4 * * Spalte 2, Zeile 3 - Spalte 4, Zeile 8 * * Abbildungen 1-2 * ----- | 1-3,6, 8-11,14 | |
| X | FR 2 683 173 A1 (COMMISSARIAT ENERGIE ATOMIQUE [FR]) 7. Mai 1993 (1993-05-07) * Ansprüche 1-21 * * Seite 2, Zeile 31 - Seite 4, Zeile 31 * * Seite 7, Zeile 10 - Seite 8, Zeile 23 * * Abbildungen 1-5 * ----- | 1-3,6, 9-11,14 | |
| X | US 5 506 062 A (FLAMMANG DENIS [FR]) 9. April 1996 (1996-04-09) * Ansprüche 1-16 * * Spalte 3, Zeile 36 - Spalte 7, Zeile 49 * * Abbildungen 1-19 * ----- | 1-3,6,9, 14 | RECHERCHIERTE SACHGEBIETE (IPC) B32B B23K F41H |
| X | DE 91 11 901 U1 (THEODOR KLUSENDICK GMBH & CO KG) 7. November 1991 (1991-11-07) * Ansprüche 1-4 * * Seite 3, Zeile 1 - Seite 8, Zeile 5 * * Abbildungen 1-6 * ----- -/-- | 1-3,6,9, 14 | |

Der vorliegende Recherchenbericht wurde für alle Patentansprüche erstellt

| Recherchenort | Abschlußdatum der Recherche | Prüfer |
|---|---|---|
| München | 19. April 2010 | Ansorge, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 09 17 8757

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/033882 A2 (ALL CLAD METALCRAFTERS LLC [US]; MILNTHORP JOHN [US]) 20. März 2008 (2008-03-20) * Ansprüche 1-17 * * Absätze [0004] - [0022] * * Abbildungen 1-6 * | 1-3,6, 8-11,14 | |
| X | WO 2006/099913 A1 (FEDERAL MOGUL DEALING SYSTEMS [DE]; KRUS RALF [DE]; PAULUS JOACIM [DE]) 28. September 2006 (2006-09-28) * Ansprüche 1-21 * * Seite 2, Zeile 25 - Seite 7, Zeile 22 * * Seite 10, Zeilen 5-10 * * Seite 13, Zeile 27 - Seite 14, Zeile 14 * * Abbildungen 1-7 * | 1-3,8,9, 14 | |
| X | JP 2009 241306 A (NIHON CERATEC CO LTD; TAIHEIYO CEMENT CORP) 22. Oktober 2009 (2009-10-22) * Zusammenfassung * | 1,9 | |
| X | DE 10 2005 012923 A1 (DURLUM LEUCHTEN [DE]) 28. September 2006 (2006-09-28) * Ansprüche 1-16 * * Absätze [0007] - [0028] * * Abbildungen 1-12 * | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 19. April 2010 | Ansorge, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 17 8757

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-04-2010

| Im Recherchenbericht angeführtes Patentdokument | | Datum der Veröffentlichung | Mitglied(er) der Patentfamilie | | Datum der Veröffentlichung |
|---|---|---|---|---|---|
| DE 4412865 | A1 | 19-10-1995 | KEINE | | |
| US 3406446 | A | 22-10-1968 | KEINE | | |
| FR 2683173 | A1 | 07-05-1993 | KEINE | | |
| US 5506062 | A | 09-04-1996 | KEINE | | |
| DE 9111901 | U1 | 07-11-1991 | KEINE | | |
| WO 2008033882 | A2 | 20-03-2008 | US 2008099183 | A1 | 01-05-2008 |
| WO 2006099913 | A1 | 28-09-2006 | CN 101111411 | A | 23-01-2008 |
| | | | DE 102005013311 | A1 | 05-10-2006 |
| | | | EP 1861290 | A1 | 05-12-2007 |
| | | | JP 2008534338 | T | 28-08-2008 |
| | | | KR 20070114173 | A | 29-11-2007 |
| | | | US 2009026008 | A1 | 29-01-2009 |
| JP 2009241306 | A | 22-10-2009 | KEINE | | |
| DE 102005012923 | A1 | 28-09-2006 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1235973 A
- DE 102006025280 A1

- GB 2335973 A

**In der Beschreibung aufgeführte Nicht-Patentliteratur**

- Aluminium-Steel composite materials. *veröffentlicht,* 16. Juni 1971